# EUROPÄISCHE PATENTSCHRIFT

(11) **EP 1 854 641 B1**
(45) Veröffentlichungstag und Bekanntmachung des Hinweises auf die Patenterteilung: **04.06.2014**
(21) Anmeldenummer: 07008701.0
(22) Anmeldetag: 27.04.2007
(51) Int. Cl.: B42D 15/00

(54) **Banknote und Verfahren zu deren Herstellung**
Banknote and method for manufacturing it
Billet de banque et procédé pour sa fabrication

(30) Priorität: 12.05.2006 DE 102006022703
(43) Veröffentlichungstag der Anmeldung: 14.11.2007
(73) Patentinhaber: Giesecke & Devrient GmbH, 81677 München (DE)
(72) Erfinder: Liebler, Ralf, Dr., 83727 Schliersee (DE); Winkler, Karin, 83703 Gmund (DE)

(56) Entgegenhaltungen:
- EP-A1- 1 134 091
- WO-A1-03/029003
- WO-A2-2004/028825
- FR-A1- 2 767 091
- GB-A- 565 708
- US-A- 2 373 540

## Beschreibung

Die Erfindung betrifft eine Folienverbundbanknote, eine Verbundfolie zur Herstellung der Folienverbundbanknote sowie jeweils ein Verfahren zur Herstellung der Verbundfolie und zur Herstellung der Folienverbundbanknote aus der Verbundfolie.

Banknoten werden üblicherweise aus sogenannten Sicherheitspapieren gefertigt, die besondere Sicherheitsmerkmale, wie zum Beispiel einen zumindest teilweise in Papier eingearbeiteten Sicherheitsfaden und ein Wasserzeichen, aufweisen und die in der Regel aus Baumwollfasern hergestellt sind. Es gibt zahlreiche Ansätze, die Haltbarkeit und Anschmutzbarkeit solcher Banknoten zu verbessern, zum Beispiel durch Einsatz beschichteter Basispapiere, durch Lackierung der bedruckten Noten, durch Zusatz von Verstärkungsfasern oder durch Einsatz von Plastiksubstraten. Beschichtungen und Lackierungen haben den Nachteil, dass zwar die Verschmutzung reduziert wird, die mechanischen Eigenschaften aber kaum positiv beeinflusst werden. Verstärkungsfasern wirken sich zwar vorteilhaft auf die mechanische Beständigkeit aus, die Anschmutzbarkeit wird aber eher größer durch die höhere Porosität des Papiers, so dass dann meist zusätzliche Beschichtungen aufgebracht werden müssen, was zusätzlichen Arbeitsaufwand und Ausschuss bedeutet. Banknoten aus Plastik weisen demgegenüber gute Einreißfestigkeiten auf, jedoch sehr schlechte Weiterreißfestigkeiten. Darüber hinaus fehlt es Banknoten aus Plastik an dem banknotentypischen Griff und Klang.

Hohe Haltbarkeit und geringe Anschmutzbarkeit von Banknoten mit Papiereigenschaften lassen sich aber durch Verwendung von Verbunden aus Papier mit außen aufgebrachten Folienlagen erzielen. Der Papierkern einer solchen Folienverbundbanknote gewährleistet zudem eine gute Weiterreißfestigkeit und den banknotentypischen Klang und Griff. Die Bedruckbarkeit kann durch auf den Folienoberflächen aufgebrachte Farbannahmeschichten sichergestellt werden. Entsprechende Folienverbundbanknoten und Verbundfolien zur Herstellung derselben sind in der WO 2004/028825 A2 beschrieben.

Die vorliegende Erfindung entwickelt die aus der WO 2004/028825 A2 bekannten Verbundfolien und Folienverbundbanknoten weiter. Die dort angegebenen Materialien für die Folien und den Papierkern können identisch auch für die vorliegende Erfindung verwendet werden. Das gilt entsprechend für die darin vorgeschlagenen Kleber zum Verbinden dieser Materialien und für die dort vorgeschlagenen Sicherheitsmerkmale, mit der die Fälschungssicherheit der Folienverbundbanknote erhöht werden soll.

In der WO 2004/028825 A2 wird vorgeschlagen, Papierschicht, Folie und den die Papierschicht mit der Folie verbindenden Kleber passgenau auszubilden, um einen festen Zusammenhalt der Schichten zu gewährleisten, so dass die Spaltbarkeit reduziert wird. Dennoch kann es bei der bestimmungsgemäßen Handhabung zur Spaltung der Banknoten kommen. Auch durch bewusste Manipulation, zum Beispiel unter Zuhilfenahme von Lösemitteln oder durch Einlegen in Wasser, können Fälscher die Folienverbundbanknoten spalten und die fehlende Hälfte durch eine Kopie ergänzen. Dabei wird der Verbund entweder an den Grenzflächen zwischen Folie und Papier oder im Papier selbst gespalten, insbesondere wenn die Eigenfestigkeit des Papiers vorher durch Wässern geschwächt wurde.

In der EP 1134 091 B1 wird vorgeschlagen, den Folienverbund zu stärken, indem der Papierkern mit Durchflusslöchern versehen wird, die sich beim Verkleben der äußeren Kunststoffschichten mit dem Papierkern mit Klebstoff füllen, so dass die äußeren Schichten über den Kleber im Bereich dieser Löcher direkt miteinander verbunden sind. Diese Durchflusslöcher sind in Linien parallel zu den Außenkanten der Banknote angeordnet, können aber auch in einem unsymmetrischen Muster angeordnet sein und eine beliebige Form aufweisen. Derartige Löcher im Papierkern sind aber nicht immer erwünscht, da sie die Designfreiheit zum Teil erheblich einschränken.

Ergänzend wird in der EP 1134 091 B1 vorgeschlagen, den Papierkern innerhalb der Außenkanten der äußeren Kunststoffschichten anzuordnen, so dass die äußeren Schichten entlang des Umfangs der Banknote direkt miteinander mittels des Klebstoffs verbunden werden können, um auf diese Weise die Kanten vor Delamination besonders zu schützen. Derartige Maßnahmen verhindern jedoch einen Rolle-zu-Rolle-Prozess bei der Verbundfolienherstellung, da die Versiegelung eines umlaufenden Randes erst nach der Banknotenvereinzelung möglich ist. Die Herstellung einer Mehrnutzenverbundfolie, aus der dann in üblicher Weise die fertigen Einzelbanknoten herausgeteilt werden, ist dadurch ausgeschlossen.

In der WO 2004/076198 A1 wird eine Folienverbundbanknote vorgeschlagen, bei der die Folien mit der Papierschicht ohne Einsatz eines Klebers verbunden wird. Allerdings liegt hier die Kunststoffschicht einseitig auf einer Papierlage oder zwischen zwei Papierlagen vor, um die typische Haptik von Papier nicht zu verlieren. Die innige Verbindung zwischen den Papierlagen und der Kunststoffschicht wird gewährleistet, indem Teile der Kunststoffschicht mit der Masse des Faserverbunds der Papierlagen verschmolzen werden. Dabei dringt das Kunststoffmaterial in die Papierlage ein und kann bis zur gegenüberliegenden Seite der Papierlage hindurchdringen, um so deren Verschmutzungsanfälligkeit zu reduzieren.

WO 03/029003 A1 offenbart ein Wertdokument mit einem verstärkten Kantenbereich, der Folienmaterial wie Polyester, Metall, oder Polyester-Metall-Laminat aufweisen kann. Das Folienmaterial kann eine Dicke von 15 µm und eine Breite von 1,4 mm aufweisen. Das Folienmaterial wird in Papier gleichmäßiger Dicke eingebettet, wobei das Folienmaterial zusätzlich kleberbeschichtet sein kann, um einen verbesserten Zusammenhalt zwischen Papier und Folienmaterial zu gewährleisten. Gemäß einer Ausführungsform kann das Wertdokument eine Verstärkung aufweisen, die beidseitig auf das Sicherheitspapier des Wertdokuments aufgebracht wird und zwar so, dass das Folienmaterial über die Kante des fertigen Wertdokuments hinausragt.

Aufgabe der vorliegenden Erfindung ist es, eine Folienverbundbanknote bzw. eine Verbundfolie für deren Herstellung vorzuschlagen, bei der die Gefahr der Spaltung bei bestimmungsgemäßer Handhabung oder durch bewusste Manipulation möglichst gering ist.

Diese Aufgabe wird durch eine Folienverbundbanknote, eine Verbundfolie für deren Herstellung sowie durch ein Verfahren zur Herstellung der Verbundfolie und zur Herstellung der Folienverbundbanknote mit den Merkmalen der nebengeordneten Ansprüche gelöst. In davon abhängigen Ansprüchen sind vorteilhafte Weiterbildungen und Ausgestaltungen der Erfindung angegeben.

Demnach umfasst eine erfindungsgemäße Folienverbundbanknote zwei polymere Deckschichten und mindestens eine zwischen den Deckschichten liegende Zwischenschicht. Die polymeren Deckschichten definieren dabei in üblicher Weise Ecken, worunter auch abgerundete Ecken zu verstehen sind, und Kanten der normalerweise rechteckigen Banknote. Wesentlich für die Erfindung ist, dass die Deckschichten zumindest an den Ecken, vorzugsweise aber auch zumindest streckenweise an den Kanten direkt miteinander verbunden sind, wobei sich jedoch die Zwischenschicht zumindest im Bereich der Kanten zumindest teilweise bis zu den Kanten erstreckt.

Eine solche Folienverbundbanknote bietet den Vorteil, dass die für die Spaltung besonders empfindlichen Ecken und Kanten aufgrund der direkt miteinander verbundenen Deckschichten besonders gut gegen Spaltung geschützt sind. Denn die Spaltungsgefahr besteht vornehmlich an Grenzflächen zwischen den aus unterschiedlichen Materialien bestehenden Deck- und Zwischenschichten. Durch ein direktes Verbinden der Deckschichten miteinander wird dieser Gefahr begegnet. Im Ergebnis ist die Gefahr der Spaltung bei der erfindungsgemäßen Folienverbundbanknote sowohl bei bestimmungsgemäßer Handhabung aber auch bei Manipulationsversuchen sehr gering.

Gleichzeitig wird durch die Maßnahme, dass sich die Zwischenschicht im Bereich der Kanten zumindest teilweise bis zu den Kanten erstreckt, erreicht, dass die Folienverbundbanknote in einem rationellen Fertigungsprozess herstellbar ist. Denn die Zwischenschicht kann dann als Mehrnutzenbogen oder Mehrnutzenrolle gehandhabt werden und insgesamt zwischen die beiden polymeren Deckschichten eingebracht und mit ihnen verbunden werden, um eine Mehrnutzenverbundfolie herzustellen, aus der dann die einzelnen Folienverbundbanknoten in üblicher Weise herausteilbar sind. Löcher in der Zwischenschicht zur Verbindung der Deckschichten, wie in EP 1134 091 B1 vorgeschlagen, können entfallen, wodurch die Designfreiheit für den Banknotendesigner erhalten bleibt.

Vorzugsweise handelt es sich bei der Zwischenschicht um eine Papierschicht, um im Zusammenwirken mit den polymeren Deckschichten der Banknote Knick- und Falteigenschaften zu verleihen, die dem eines Blattes möglichst nahe kommen. Insbesondere soll die Banknote soweit wie möglich die Griffigkeit und den Klang von Papier aufweisen.

An die Art der Papierschicht sind keine Bedingungen geknüpft, so dass übliche Papiere aus Fasern von Einjahrespflanzen, insbesondere Baumwollfasern oder Zellstofffasern, verwendet werden können, aber auch Papiere, die zumindest teilweise aus Kunststofffasern, vorzugsweise Polyamidfasern, bestehen.

Die Papierschicht weist üblicherweise ein Gewicht von 50 g/m² bis 100 g/m² auf, vorzugsweise 70 g/m² bis 90 g/m². Selbstverständlich kann je nach Anwendungsweise jedes geeignete Gewicht eingesetzt werden. Die Papierschicht kann einlagig wie auch mehrlagig verarbeitet werden. Bei mehrlagigen Papierschichten können die Papierschichten aus gleichen oder unterschiedlichen Papiersorten bestehen und wiederum mit Kunststofffolien kombiniert sein. Im Folgenden wird unter Papierschicht sowohl die einlagige wie auch die mehrlagige Variante verstanden.

Bei den polymeren Deckschichten handelt es sich vorzugsweise um Kunststofffolien aus Polyethylenterephthalat (PET) oder orientiertem Polypropylen (OPP). Selbstverständlich ist auch jedes andere geeignete Kunststoffsubstrat einsetzbar. Je nach Anwendung können die Folien mattiert oder glänzend ausgeführt sein. Die Folien weisen eine Dicke von vorzugsweise 1 µm bis 20 µm, besonders bevorzugt 6 µm bis 15 µm, auf. Je nach Anwendung können auch Folien von lediglich 6 µm eingesetzt werden. In diesem Fall kommen die typischen Eigenschaften eines Papierblattes, wie Knitterfähigkeit und Faltbarkeit, besonders gut zur Geltung.

Nachfolgend werden bevorzugte Varianten beschrieben, wie die Deckschichten an den Ecken und gegebenenfalls auch zumindest streckenweise an den Kanten direkt miteinander verbunden werden können, nämlich durch Verkleben, Verschweißen oder Crimpen. Das Verschweißen oder Verkleben kann auch mit dem Crimpen kombiniert werden.

Unter Crimpen wird gemäß der Wikipedia-Enzyklopädie, Kategorie Fertigungstechnik, die Herstellung einer homogenen, nicht lösbaren Verbindung zwischen einem Leiter und einem Verbindungselement verstanden. In Anlehnung an diese Definition wird im Rahmen der vorliegenden Anmeldung die nicht lösbare Verbindung der beiden Deckschichten verstanden, wobei die Verbindung auch zumindest teilweise durch die Zwischenschicht der Banknote hindurch erfolgen kann. Das Crimpen kann des Weiteren auch unter Wärmeeinwirkung auf die Deckschichten erfolgen.

Für die Fälle des Verklebens oder Verschweißens ist die Zwischenschicht an den Verbindungsstellen ausgespart oder in ihrer Dicke reduziert ausgebildet. Es ist auch möglich, einzelne Verbindungsstellen, z. B. die Ecken, durch Aussparungen und andere Verbindungsstellen, z. B. die Kanten, durch Dünnstellen zu realisieren. Für den Fall des Crimpens ergibt sich eine besonders gute Verbindung der Deckschichten, wenn die Zwischenschicht an den Verbindungsstellen ausgespart ist. Sofern die Zwischenschicht an den Verbindungsstellen dagegen Dünnstellen aufweist, sollte die Dicke der Dünnstellen so gewählt werden, dass die Deckschichten nach dem Crimpen zumindest in Teilen der Verbindungsstellen direkt miteinander verbunden sind.

Die Aussparungen bzw. Löcher in der Zwischenschicht können beispielsweise durch Stanzen, Laserstrahlschneiden, Wasserstrahlschneiden, Druckluftschneiden oder ein anderes industrielles Schneideverfahren erzeugt werden.

Besonders bevorzugt ist es allerdings, dass die Aussparungen bzw. Löcher in der Zwischenschicht während der Papierherstellung erzeugt werden. Dabei ist es insbesondere möglich, Aussparungen herzustellen, die keine scharfe Begrenzungskante aufweisen. Zur Herstellung der Aussparungen während der Papierherstellung wird auf die WO 03/054297 A2 verwiesen.

Die Stellen reduzierter Dicke können beispielsweise als Wasserzeichen ausgebildet sein. Insbesondere flächige Wasserzeichen, wie sie mit Elektrotypen herstellbar sind, sind besonders geeignet.

Die Aussparungen in der Zwischenschicht ermöglichen ohne weiteres das direkte Verkleben, Verschweißen oder Crimpen der beiden Deckschichten miteinander durch die Aussparungen hindurch. Sofern dagegen alle oder einzelne Verbindungsstellen als Dünnstellen ausgeführt sind, ergibt sich die direkte Verbindung der beiden Deckschichten erst dann, wenn im Falle des Verklebens der Kleber und im Falle des Verschweißens das Material der Deckschichten die Zwischenschicht vollständig penetriert. Beim Vorliegen von Dünnstellen muss das Crimpen mit einer ausreichend hohen Anpresskraft und/ oder bei einer ausreichend hohen Wärmezufuhr erfolgen, um eine direkte Verbindung der Deckschichten zumindest in Teilen der Dünnstellen sicherzustellen. In allen Fällen wird eine Grenzschichtbildung zwischen den Deckschichten und der Zwischenschicht und damit die Gefahr des Aufspaltens der Banknotenschichten verhindert.

Während Löcher an den Kanten nur streckenweise vorgesehen sind, so dass in einem Mehrnutzenbogen oder auf einer Mehrnutzenrolle aneinandergrenzende Banknoten über ihre Kanten noch zusammenhängen, können sich Dünnstellen über die gesamte Kantenlänge erstrecken, da die Banknoten in einem Mehrnutzenbogen oder auf einer Mehrnutzenrolle auch über dünner ausgebildete Kantenbereiche miteinander verbunden bleiben.

Wie bereits erwähnt, ist es beim Crimpen denkbar, wenn an den Verbindungsstellen Zwischenschichtmaterial vorhanden ist. Die Zwischenschicht kann dabei auch als Dünnstelle ausgebildet sein. Beim Crimpen kann man also ganz ohne Aussparung in der Zwischenschicht auskommen.

Die genannten Varianten Verkleben, Verschmelzen und Crimpen können miteinander kombiniert werden, soweit eine Kombination im Einzelfalle nicht ausgeschlossen ist. Das heißt beispielsweise, dass eine Klebeverbindung auch gecrimpt werden kann und/ oder dass einzelne Verbindungen verschweißt und andere Verbindungen verklebt sind und/oder dass die Zwischenschicht an einzelnen Verbindungsstellen Aussparungen besitzt und an anderen Verbindungsstellen als Dünnstelle ausgebildet ist.

Dünnstellen können im Gegensatz zu Aussparungen auch an über der Zwischenschicht verteilten Stellen, das heißt in einem zentralen Bereich der Folienverbundbanknote, vorgesehen werden, da sie nicht so transparent und störend wirken wie Löcher. Die Designfreiheit ist in diesem Falle also nicht eingeschränkt.

Andererseits können zusätzlich Durchsichtslöcher in der Fläche der Zwischenschicht vorgesehen sein, die als weiteres Sicherheitselement oder als Designelement zur visuellen Wahrnehmung dienen, wie es beispielsweise in WO 2004/028825 A2 beschrieben ist.

Zur Verhinderung etwaiger Manipulationsversuche wurde in der WO 2004/028825 A2 des Weiteren vorgeschlagen, die Deckfolien mit einer im Wesentlichen nicht sichtbaren Mikroperforation zu versehen, so dass es bei mechanischen Manipulationen zur Zerstörung der Folien kommt. Die Mikroperforation kann auch erst in einem späteren Herstellungsschritt vorgesehen werden, wobei gegebenenfalls die Papierschicht mit perforiert wird.

Eine andere Maßnahme besteht darin, den Folienverbund so zu gestalten, dass er beim Spalten undefiniert reißt. Dies wird dadurch erreicht, dass ein Sicherheitsfaden als Fensterfaden, der einseitig an die Oberfläche der Zwischenschicht tritt, oder als Pendelfaden, der an beiden Seiten der Zwischenschicht an die Oberfläche tritt, eingelagert und mit den angrenzenden Deckschichten verklebt oder verschweißt wird. Beim Versuch, die Verbundbanknote zu spalten, reißt diese im Bereich des Fenster- oder Pendelfadens so undefiniert, dass ein Fälschungsversuch bereits im Ansatz verhindert wird, da ein erneutes Zusammenfügen der unregelmäßigen bzw. undefinierten Spaltprodukte praktisch nicht möglich ist oder aber die Fälschung sofort kenntlich macht.

Eine noch weitere Möglichkeit zum Erzeugen einer undefinierten Sollbruchlinie besteht darin, einen dickenreduzierten Bereich in der Zwischenschicht zu erzeugen, der über die gesamte Banknotenhöhe und/ oder Banknotenlänge verläuft, so dass beim Spaltversuch keine brauchbaren Banknotenhälften entstehen. Dies kann im Falle einer papierenen Zwischenschicht bereits bei der Papierherstellung durch Absaugen der Formerbahn im Bereich der herzustellenden Dünnstelle erreicht werden.

Nachfolgend wird die Erfindung beispielhaft anhand der begleitenden Zeichnungen erläutert. Darin zeigen:
- Fig.1: eine Folienverbundbanknote gemäß einem ersten Ausführungsbeispiel der Erfindung,
- Fig. 2: eine Verbundfolie in Gestalt eines Mehrnutzen-Banknotenbogens mit mehreren Banknoten nach Fig.1,
- Fig. 3: die Verbundfolie aus Fig. 2 im Querschnitt,
- Fig. 4: eine Folienverbundbanknote gemäß einem zweiten Ausführungsbeispiel der Erfindung,
- Fig. 5: eine Verbundfolie in Gestalt eines Mehrnutzen-Banknotenbogens mit mehreren Banknoten gemäß Fig. 4,
- Fig. 6: die Verbundfolie aus Fig. 5 im Querschnitt,
- Fig. 7: eine Folienverbundbanknote gemäß einem dritten Ausführungsbeispiel der Erfindung,
- Fig. 8: einen Querschnitt durch die Folienverbundbanknote nach Fig. 7, und
- Fig. 9: eine schematische Darstellung des Verfahrensablaufs zur Herstellung erfindungsgemäßer Verbundfolien.

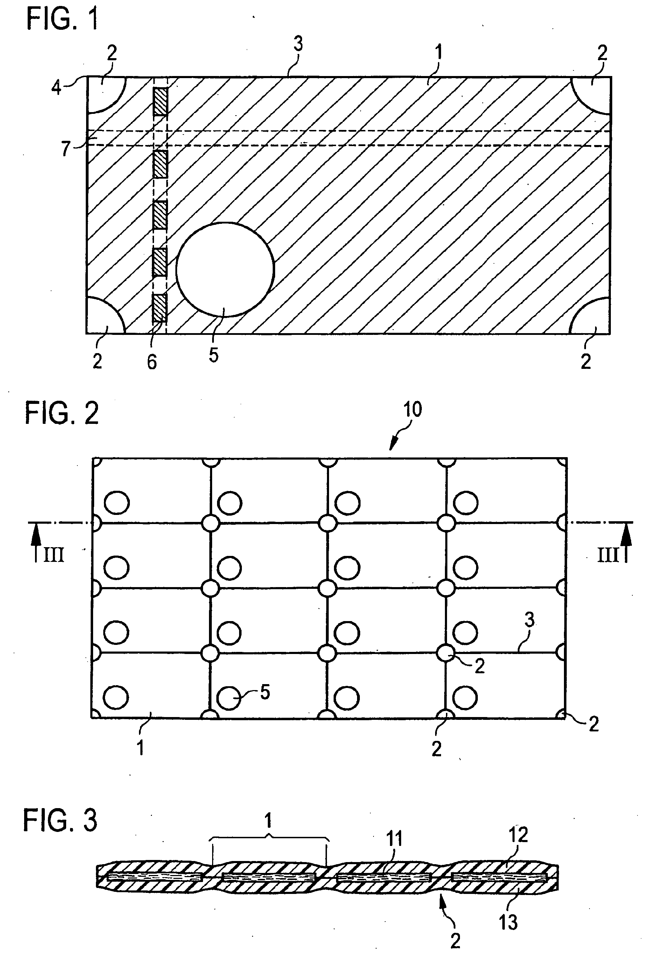

In Fig.1 ist eine Folienverbundbanknote 1 gemäß einem ersten Ausführungsbeispiel dargestellt. Die Banknote 1 besteht aus zwei transparenten, gegebenenfalls bedruckten, polymeren Deckschichten 12,13 und einer zwischen den Deckschichten angeordneten Papierschicht als Zwischenschicht 11. Nur die Papierschicht besitzt Aussparungen 2 an den die Kanten 3 verbindenden Ecken 4 der Banknote 1. An diesen Aussparungen 2 stehen die beiden Deckschichten 12,13 daher in unmittelbarem Kontakt und sind direkt miteinander verbunden, d. h. verschweißt, verklebt oder gecrimpt.

Eine weitere Aussparung 5 in der Papierschicht bildet ein Durchsichtsloch, welches als Sicherheitsmerkmal und/oder Designelement ausgebildet sein kann.

Darüber hinaus ist in die Papierschicht ein Sicherheitsfaden 6 als Fensterfaden eingelagert. Es kann sich bei dem Sicherheitsfaden 6 neben dem gezeigten Fensterfaden, der an nur einer Oberfläche der Papierschicht zutage tritt, aber auch um einen Pendelfaden handeln, der abwechselnd an der einen und an der anderen Oberfläche der Papierschicht zutage tritt. Der Fensterfaden ist mit der Deckschicht bzw. den Deckschichten verklebt oder verschweißt. Ein Versuch des Spaltens der Banknote führt aufgrund der Verklebung oder Verschweißung an dieser Stelle zur Zerstörung des kompletten Verbunds oder eines Teils davon.

Schließlich weist die Papierschicht noch eine Dünnstelle 7 auf, welche sich über die gesamte Breite der Banknote 1 erstreckt. Die Dünnstelle 7 kann auch parallel zum Sicherheitsfaden 6 verlaufen. Auch ein schräger Verlauf oder ein gekrümmter oder beliebiger anderer Verlauf sind möglich. An der Dünnstelle 7 ist die Papierschicht gegenüber der allgemeinen Papierschichtdicke verringert. Solche Dünnstellen lassen sich während der Papierherstellung durch Absaugen der Formerbahn herstellen. Zweck der Dünnstelle 7 ist es, die Verbundfolie so zu gestalten, dass sie im Falle der Spaltung undefiniert reißt, so dass keine brauchbaren Banknotenhälften entstehen. Die Dünnstelle 7 dient somit vornehmlich als Fälschungsschutz.

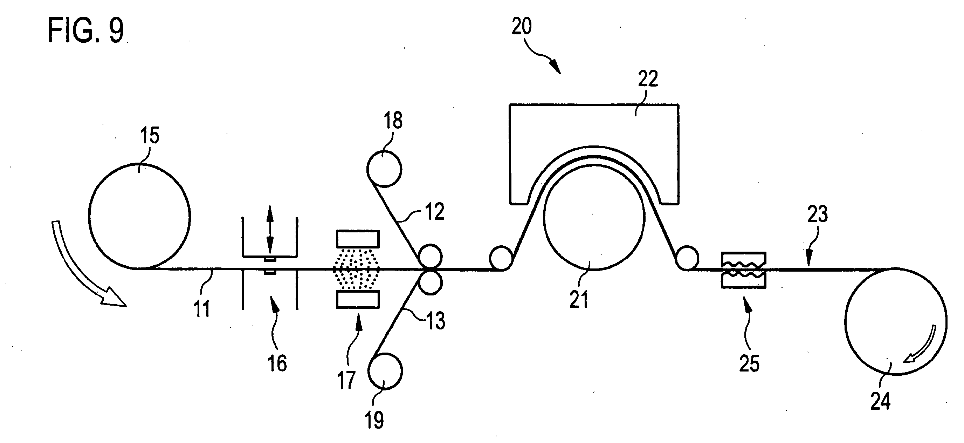

In Fig. 2 ist eine Verbundfolie als Mehrnutzen-Banknotenbogen 10 dargestellt, der im gezeigten Ausführungsbeispiel sechzehn Einzelbanknoten 1 gemäß Fig.1 umfasst und in der Praxis wesentlich mehr Einzelbanknoten 1 umfassen kann. Die Einzelbanknoten 1 grenzen in dem Mehrnutzenbogen 10 mit ihren Kanten 3 unmittelbar aneinander. Solche Mehrnutzenbögen werden aus Rollenmaterial zurechtgeschnitten, dessen Herstellung später anhand Fig. 9 näher erläutert wird.

Zu sehen sind in Fig. 2 die als Durchsichtslöcher oder Durchsichtsfenster ausgebildeten Aussparungen 5 und die Aussparungen 2 an den Ecken der Einzelbanknoten, die an den Seitenkanten des Mehrnutzenbogens 10 Halbkreise bilden und sich in der Fläche des Mehrnutzenbogens 10 zu kreisförmigen Löchern ergänzen. Selbstverständlich können die Aussparungen 2 auch andere Formen haben. Die Herstellung der Aussparungen 2 kann gemäß der Offenbarung der WO 03/054297 A2 während der Blattbildung der Papierschicht 11 erfolgen. Die Aussparungen 2 können in dem Mehrnutzenbogen 10 aber auch nachträglich durch Stanzen, Laserstrahlschneiden, Wasserstrahlschneiden und Druckluftschneiden erzeugt werden. Das Herausteilen der Einzelbanknoten 1 aus dem Mehrnutzenbogen 10 erfolgt in entsprechender Weise entlang der in Fig. 2 dargestellten Kanten 3 zentral durch die Löcher 2 hindurch.

In Fig. 3 ist der Querschnitt des Mehrnutzenbogens 10 aus Fig. 2 schematisch dargestellt. Die Papierschicht 11 ist vollständig zwischen einer die obere Deckschicht bildenden Folie 12 und einer die untere Deckschicht bildenden Folie 13 eingebettet. Im Bereich der Aussparungen der Papierschicht 11 sind die obere Folie 12 und die untere Folie 13 unmittelbar durch Verkleben oder Verschweißen miteinander verbunden, wobei für den Fall des Verklebens die erforderliche Kleberschicht nicht dargestellt ist.

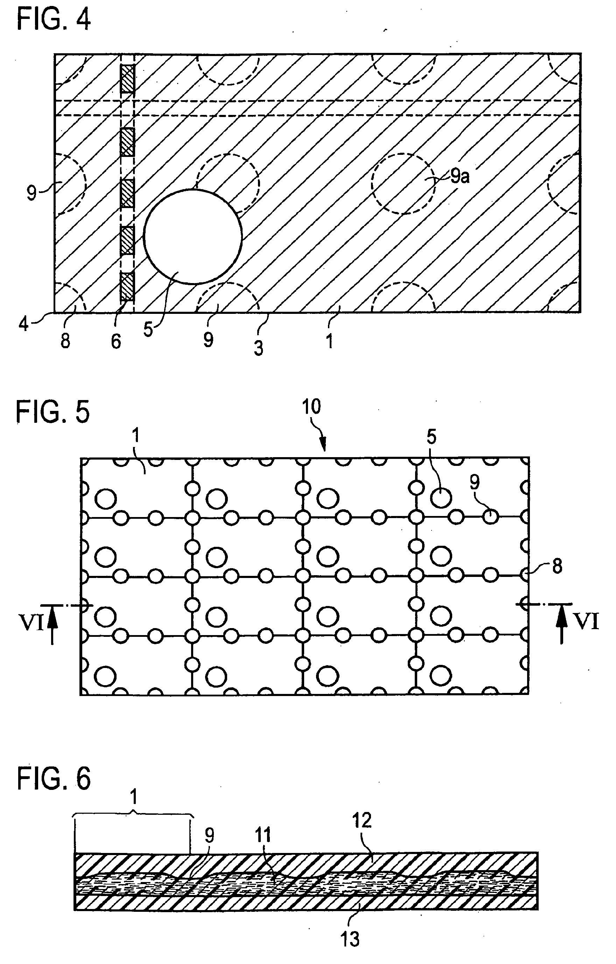

In Fig. 4 ist ein zweites Ausführungsbeispiel dargestellt, welches sich in zweierlei Hinsicht von dem ersten Ausführungsbeispiel gemäß Fig. 1 unterscheidet. Einerseits weist die papierene Zwischenschicht 11 an den Ecken 4 keine Aussparungen, sondern lediglich als Dünnstellen ausgebildete Verbindungsstellen 8 auf und andererseits sind zusätzlich zu den Verbindungsstellen 8 an den Ecken 4 weitere Verbindungsstellen 9 an den Kanten 3 vorgesehen, die hier ebenfalls als Dünnstellen ausgebildet sind. Die Kanten 3 können auch durchgängig als Dünnstellen 9 ausgeführt sein. Es ist auch möglich, einzelne der Verbindungsstellen als Dünnstellen 8 bzw. 9 und andere der Verbindungsstellen, wie in Fig. 1 gezeigt, als Aussparungen 2 in der Papierschicht 11 auszuführen. Darüber hinaus sind im zentralen Bereich der Papierschicht 11 weitere Dünnstellen 9a als Verbindungsstellen ausgebildet.

Während die obere Folie 12 und die untere Folie 13 im ersten Ausführungsbeispiel im Bereich der Aussparungen 2 unmittelbar miteinander in Kontakt kommen, ist es für das zweite Ausführungsbeispiel gemäß Fig. 4 von Bedeutung, dass die Verbindung der oberen Folie 12 mit der unteren Folie 13 durch die Papierschicht 11 hindurch erfolgt. Indem die Verbindungsstellen 8, 9, 9a als Dünnstellen ausgeführt sind, ist es möglich, dass im Falle des Verklebens der Kleber und im Falle des Verschweißens das Material der oberen und unteren Folien 12,13 die dazwischen liegende Papierschicht 11 vollständig penetrieren, so dass eine direkte, innige Verbindung zwischen den beiden Folien 12,13 durch die Verbindungsstellen 8, 9, 9a hindurch hergestellt wird.

Dies ist in Fig. 6 schematisch dargestellt, welche einen Querschnitt durch einen Mehrnutzenbogen gemäß Fig. 5 zeigt, der wiederum sechzehn Einzelbanknoten 1 gemäß dem Ausführungsbeispiel nach Fig. 4 umfasst. In diesem Falle sind die obere Folie 12 und die untere Folie 13 durch die zentrale Papierschicht 11 hindurch miteinander verschweißt. Beim Verschweißen dringt das schmelzflüssige Folienmaterial bis in eine gewisse Tiefe in die Papierschicht 11 ein. Im Bereich der Dünnstellen 9 ist die Papierschicht 11 so dünn ausgebildet, dass sich die Schmelze der beiden Folien 12,13 in der Papierschicht 11 trifft und vereinigt. Das vollständige Penetrieren des Materials der beiden Folien 12, 13 durch die Papierschicht 11 im Bereich der Dünnstellen 9 ist durch die durchgezogenen Linien 90 in Fig. 6 angedeutet. Ein Aufspalten der Schichten führt an den Dünnstellen zu einem Reißen des Verbunds.

Die Dünnstellen 8, 9, 9a können in vorteilhafter Weise während der Papierherstellung als Wasserzeichen in das Papier eingebracht, insbesondere mittels Elektrotypen als E-Typen-Wasserzeichen bereits auf dem Papiersieb erzeugt werden.

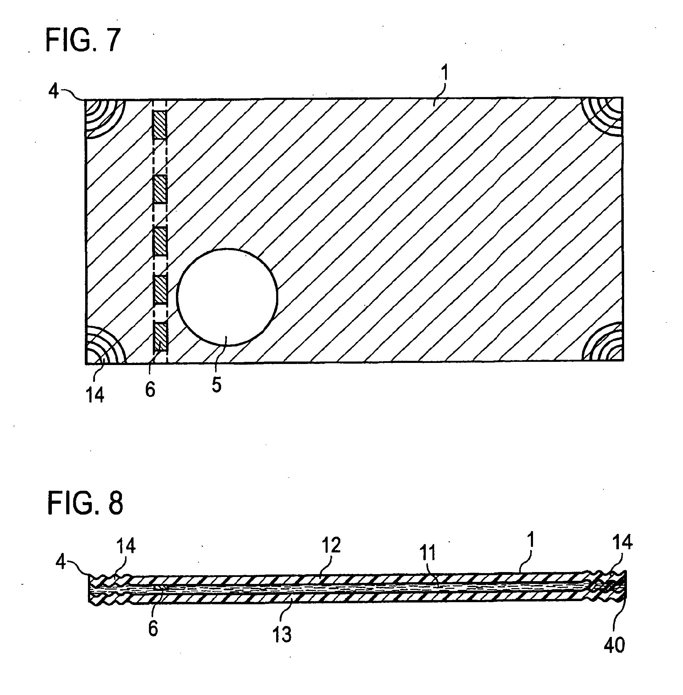

Fig. 7 zeigt ein drittes Ausführungsbeispiel. Hier sind die fest miteinander zu verbindenden Ecken 4 der Banknote 1 gecrimpt. Wenn die Banknote 1 auf diese Weise an ihren Ecken 4 gegen Aufspalten geschützt werden soll, ist es möglich, dass sich die innen liegende Papierschicht 11 bis zu den Ecken 4 erstreckt. Crimpen ist in der Elektroindustrie weit verbreitet zum Verbinden metallischer Leiter durch Folie hindurch. Der Schichtverbund wird dabei miteinander dreidimensional verpresst, so dass sich beispielsweise ein Wellenmuster ergibt. Dieses Wellenmuster 14 kann gleichzeitig als taktiles Echtheitsmerkmal der Banknote dienen.

In Fig. 8 ist die Banknote 1 aus Fig. 7 mit dem wellenförmigen Profil 14 der gecrimpten Ecken 4 schematisch im Querschnitt dargestellt. Dabei ist im Bereich der mit dem Bezugszeichen 4 versehenen Ecke zu erkennen, dass die Folien 12 und 13 nicht in direktem Kontakt miteinander stehen, was z. B. durch einen entsprechend gewählten Anpressdruck beim Crimpen realisiert werden kann. Wenngleich eine solche Anordnung, bei der die Zwischenschicht 11 einen direkten Kontakt der Folien 12 und 13 verhindert, im Rahmen dieser Anmeldung nicht bevorzugt ist, stellt sie eine verhältnismäßig einfache und sichere Verbindung der Schichten 11, 12 und 13 im Bereich der Ecken der Banknote 1 dar. Andererseits ist in der mit dem Bezugszeichen 40 versehenen Ecke eine direkte Verbindung des gecrimpten Bereichs 14 durch die Papierschicht 11 hindurch durch die durchgezogenen Linien 44 angedeutet, wobei die Verbindung durch Verschweißen des Materials der oberen und unteren Folien 12,13 unter Wärmeeinwirkung realisiert ist, wie bereits weiter oben ausgeführt.

Anhand der Fig. 9 wird nun das Herstellungsverfahren einer Verbundfolie erläutert, aus der die zuvor beschriebenen Mehrnutzenbogen 10 oder unmittelbar die Einzelbanknoten 1 herausgeteilt werden können.

Zunächst wird eine Sicherheitspapierrolle 15 bereitgestellt. Das darauf aufgewickelte Sicherheitspapier ist bereits mit Sicherheitsfäden 6 und auch mit den Dünnstellen 7, 8, 9, 9a ausgestattet, soweit die endgültigen Banknoten derartige Merkmale aufweisen. Weitere Sicherheitsmerkmale, wie zum Beispiel ein auf die Oberfläche aufgebrachter Sicherheitsstreifen, können im weiteren Herstellungsprozess in üblicher Weise ergänzt werden. Dies wird nachfolgend allerdings nicht weiter vertieft.

Das Sicherheitspapier 11 durchläuft eine Stanzstation 16, in der die Aussparungen 2 und die Durchsichtslöcher 5 aus dem Papier 11 herausgestanzt werden. Anstelle der Stanzstation 16 kann auch eine Laserstrahlschneidstation, Wasserstrahlschneidstation oder Druckluftschneidstation vorgesehen sein.

Sofern die Aussparungen 2 und die Durchsichtslöcher 5 bereits während der Papierherstellung in das Sicherheitspapier eingebracht werden, entfällt naturgemäß der Arbeitsschritt des Stanzens in der Stanzstation 16 oder einer der oben genannten Stationen.

Anschließend durchläuft das Papier 11 eine Klebeauftragstation 17, mittels der beidseitig Kleber auf die Oberflächen des Papiers 11 teilflächig oder vorzugsweise vollflächig aufgebracht wird. Der Kleber kann alternativ auch auf die Innenseiten der oberen Folie 12 und unteren Folie 13 aufgebracht werden, die von Folienrollen 18,19 dem Papier 11 zugeführt werden, um die Verbundfolie zu bilden. Das Auftragen des Klebers auf die Papierschicht 11 ist aber in den Fällen zu bevorzugen, wo die Folien im Bereich der Aussparungen und/ oder Durchsichtsfenster nicht verklebt sondern verschweißt werden sollen.

Zum Zwecke des Verschweißens der Schichten zu einer Verbundfolie durchläuft das Papier 11 mit den beidseitig angelegten Folien 12,13 eine Schweißstation, die vielgestaltig sein kann und im dargestellten Ausführungsbeispiel lediglich beispielhaft aus einer beheizten Walze 21 und einer Strahlungsheizstation 22 besteht. Die Schweißstation 20 dient dazu, das Polymermaterial der Folien 12,13 soweit aufzuschmelzen, dass es sich durch die Poren der Papierschicht 11 hindurch zumindest an den Dünnstellen 8, 9 miteinander verbindet. Die Verbundfolie kann zusätzlich durch Kalanderwalzen geführt werden, um den Penetrierungsvorgang zu unterstützen.

Die Schweißstation 20 kann auch Härtungsfunktion für den in der Kleberauftragstation 17 aufgebrachten Kleber besitzen. Sofern die Folien 12,13 nicht miteinander verschweißt sondern nur miteinander und/ oder mit der Papierschicht 11 verklebt werden, kann die Station 20 auch lediglich eine Aushärtstation für den Kleber sein. Je nach Klebertyp kann die Station 20 auch entfallen oder durch Druckwalzen ersetzt werden.

Vorzugsweise werden die Folien 12,13 auf der Papierschicht 11 kaltkaschiert. Das heißt, ein Kleber wird auf die Folie aufgebracht, angetrocknet und gegebenenfalls durch Temperaturen von vorzugsweise maximal 80 °C bis 90 °C aktiviert. Diese Verfahrensweise ist vorteilhaft, wenn die Folie nicht angeschmolzen werden soll, weil beispielsweise eventuell vorhandene Reckungen der Folien nicht zerstört werden sondern auch nach dem Kaschieren noch vorhanden sein sollen. Dazu werden vorzugsweise Wasser- oder UV-vernetzende Kleber verwendet. Besonders bevorzugt wird ein Naßkleber, insbesondere ein Polyurethankleber, eingesetzt.

Der Kleber kann auch in sehr großen Mengen verarbeitet werden, ohne die Eigenschaften des Verbundes zu schädigen. Die Verarbeitung großer Mengen weist den Vorteil auf, dass Sicherheitsmerkmale sehr leicht und in ausreichender Menge in den Kleber eingearbeitet werden können. Vorzugsweise wird der Kleber in Mengen von 6 g/m² bis 9 g/m² auf jede Folie 12,13 aufgebracht.

Sofern die Folien 12, 13 miteinander verschweißt wurden, sei es kontaktierend oder durch die Papierschicht 11 hindurch, schließt sich an die Schweißstation 20 eine Kühlstrecke 23 an, in der das Material soweit heruntergekühlt wird oder selbständig soweit herunterkühlt, dass es ohne Gefahr des Aneinanderklebens auf eine Vorratsspule 24 auf sich selbst gewickelt werden kann.

Sofern ein sicherer Verbund der Schichten 11,12,13 der Verbundfolie an den Verbindungsstellen 2, 8, 9, 9a, 14 auch bzw. nur durch Crimpen erzeugt wird, durchläuft der Folienverbund vor dem Aufwickeln auf die Vorratsspule 24 eine Crimpstation 25, in der die Schichten mechanisch dreidimensional miteinander verpresst werden.

## Patentansprüche

1. Folienverbundbanknote (1), umfassend zwei polymere Deckschichten (12, 13) und mindestens eine zwischen den Deckschichten (12, 13) liegende Zwischenschicht (11), wobei die Deckschichten (12,13) Ecken (4) und Kanten (3) der Banknote (1) definieren, die Zwischenschicht (11) sich im Bereich der Kanten (3) zumindest teilweise bis zu den Kanten (3) erstreckt, die Deckschichten (12,13) zumindest an den Ecken (4) direkt miteinander verbunden sind, die Zwischenschicht (11) sich bis zu den Ecken (4) und gegebenenfalls über die gesamte Länge der Kanten (3) bis zu den Kanten (3) erstreckt und die Verbindung der Deckschichten (12,13) an den Ecken (4) und gegebenenfalls an den Kanten (3) durch Verschweißen der beiden Deckschichten (12, 13) durch die Zwischenschicht (11) hindurch, durch Verkleben der beiden Deckschichten (12,13) mittels eines die Deckschichten (12,13) verbindenden, die Zwischenschicht (11) vollständig penetrierenden Klebers oder durch Crimpen realisiert ist und die Dicke der Zwischenschicht (11) an den Ecken (4) und gegebenenfalls an den Kanten (3) reduziert ist.

2. Folienverbundbanknote (1) nach Anspruch 1, **dadurch gekennzeichnet, dass** die Zwischenschicht (11) aus Papier, insbesondere Sicherheitspapier, besteht.

3. Folienverbundbanknote (1) nach einem der Ansprüche 1 oder 2, **dadurch gekennzeichnet, dass** die Dicke der Zwischenschicht (11) zusätzlich an über der Zwischenschicht (11) verteilten Stellen (5, 9, 9a) reduziert ist.

4. Folienverbundbanknote (1) nach Anspruch 1 oder 3, **dadurch gekennzeichnet, dass** die Ecken (4) bzw. Stellen reduzierter Dicke durch flächige Wasserzeichen gebildet sind.

5. Folienverbundbanknote (1) nach einem der Ansprüche 1 bis 4, **gekennzeichnet durch** mindestens ein ein Loch in der Zwischenschicht (11) umfassendes Sicherheitsmerkmal oder Designelement für die visuelle Wahrnehmung.

6. Folienverbundbanknote (1) nach einem der Ansprüche 1 bis 5, **gekennzeichnet durch** einen in der Zwischenschicht (11) eingelagerten Sicherheitsfaden (6), insbesondere einen Fensterfaden oder Pendelfaden.

7. Folienverbundbanknote (1) nach einem der Ansprüche 1 bis 6, **dadurch gekennzeichnet, dass** die Zwischenschicht (11) einen dickenreduzierten Bereich (7) aufweist, der sich über die gesamte Höhe und/ oder Länge der Banknote (1) erstreckt.

8. Verbundfolie (10), umfassend mehrere nebeneinander angeordnete Folienverbundbanknoten (1) nach einem der Ansprüche 1 bis 7, die einen integralen Bestandteil der Verbundfolie (10) bilden.

9. Verfahren zum Herstellen einer Verbundfolie (10) zur weiteren Herstellung von Folienverbundbanknoten (1), umfassend die Schritte:
- zur Verfügung Stellen einer vorzugsweise papierenen Zwischenschicht (11) mit Stellen (2, 5, 8, 9, 9a) reduzierter Dicke in der Zwischenschicht (11), zumindest an Orten der Zwischenschicht (11), die mit Ecken (4) von aus der Verbundfolie (10) herauszutrennenden Banknoten (1) zusammenfallen,
- Anordnen der Zwischenschicht (11) zwischen zwei polymere Deckschichten (12,13), und
- direktes Verbinden der Deckschichten (12,13) miteinander zumindest an den genannten Orten, wobei der Schritt des Verbindens der Deckschichten (12,13) an den genannten Orten das Verschweißen der beiden Deckschichten (12, 13) miteinander durch die Stellen (2, 5, 8, 9, 9a) reduzierter Dicke hindurch umfasst oder der Schritt des Verbindens der Deckschichten (12,13) an den genannten Orten das Verkleben der beiden Deckschichten (12,13) miteinander durch die Stellen (2, 5, 8, 9, 9a) reduzierter Dicke hindurch umfasst oder der Schritt des Verbindens der Deckschichten (12,13) an den genannten Orten das Crimpen der beiden Deckschichten (12, 13) miteinander durch die Stellen (2, 5, 8, 9, 9a) reduzierter Dicke hindurch umfasst.

10. Verfahren nach Anspruch 9, wobei die Zwischenschicht (11) des Weiteren Stellen (2, 8, 9) reduzierter Dicke an Orten der Zwischenschicht (11) aufweist, die mit Kanten (3) der aus der Verbundfolie (10) herauszutrennenden Banknoten (1) zusammenfallen.

11. Verfahren nach Anspruch 9 oder 10, wobei die Zwischenschicht (11) des Weiteren Stellen (5, 9a) reduzierter Dicke an Orten der Zwischenschicht (11) aufweist, die in zentralen Bereichen der aus der Verbundfolie (10) herauszutrennenden Banknoten (1) liegen.

12. Verfahren nach einem der Ansprüche 9 bis 11, **gekennzeichnet durch** den vorherigen Schritt des Erzeugens der Stellen (8, 9, 9a) reduzierter Dicke während der Herstellung der Zwischenschicht (11) als Wasserzeichen mittels Elektrotypen.

13. Verfahren nach einem der Ansprüche 9 bis 12, **gekennzeichnet durch** den weiteren Schritt des Einlagerns eines Fensterfadens (6) in die Zwischenschicht (11) während der Herstellung der Zwischenschicht (11) und des Verbindens des Fensterfadens (6) mit einer der Deckschichten (12, 13) **durch** Verkleben oder Verschweißen.

14. Verfahren nach einem der Ansprüche 9 bis 12, **gekennzeichnet durch** den Schritt des Einlagerns eines Pendelfadens (6) in die Zwischenschicht (11) während der Herstellung der Zwischenschicht (11) und des Verbindens des Pendelfadens (6) mit beiden Deckschichten (12,13) **durch** Verkleben oder Verschweißen.

## Claims

1. A foil composite banknote (1), comprising two polymeric cover layers (12, 13) and at least one intermediate layer (11) disposed between the cover layers (12, 13), wherein the cover layers (12, 13) define corners (4) and edges (3) of the banknote (1), the intermediate layer (11) in the region of the edges (3) extends at least partly up to the edges (3), the cover layers (12, 13) are directly interconnected at least in the corners (4), the intermediate layer (11) extends up to the corners (4) and possibly over the complete length of the edges (3) up to the edges (3), and the connection of the cover layers (12, 13) in the corners (4) and possibly at the edges (3) is realized by welding the two cover layers (12, 13) through the intermediate layer (11), by adhesively bonding the two cover layers (12, 13) by means of an adhesive connecting the cover layers (12, 13), completely penetrating the intermediate layer (11), or by crimping, and the thickness of the intermediate layer (11) is reduced in the corners (4) and possibly at the edges (3).

2. The foil composite banknote (1) according to claim 1, **characterized in that** the intermediate layer (11) consists of paper, in particular security paper.

3. The foil composite banknote (1) according to any of the claims 1 or 2, **characterized in that** the thickness of the intermediate layer (11) is reduced additionally in locations (5, 9, 9a) distributed over the intermediate layer (11).

4. The foil composite banknote (1) according to claim 1 or 3, **characterized in that** the corners (4) or locations of reduced thickness are formed by areal watermarks.

5. The foil composite banknote (1) according to any of the claims 1 to 4, **characterized by** at least one security feature or design element for visual perception comprising a hole in the intermediate layer (11).

6. The foil composite banknote (1) according to any of the claims 1 to 5, **characterized by** a security thread (6) embedded in the intermediate layer (11), in particular a windowed tread or pendulating thread.

7. The foil composite banknote (1) according to any of the claims 1 to 6, **characterized in that** the intermediate layer (11) has a region (7) of reduced thickness which extends over the complete height and/or length of the banknote (1).

8. A composite foil (10) comprising several foil composite banknotes (1) according to any of the claims 1 to 7 that are arranged side by side, forming an integral component of the composite foil (10).

9. A method for manufacturing a composite foil (10) for the further manufacture of foil composite banknotes (1), comprising the steps of:
- making available an intermediate layer (11) preferably of paper, having locations (2, 5, 8, 9, 9a) of reduced thickness in the intermediate layer (11), at least in places of the intermediate layer (11) coinciding with corners (4) of banknotes (1) to be detached from the composite foil (10),
- arranging the intermediate layer (11) between two polymeric cover layers (12, 13), and
- directly interconnecting the cover layers (12, 13) at least in the mentioned places, wherein the step of connecting the cover layers (12, 13) in the mentioned places comprises the welding of the two cover layers (12, 13) to each other through the locations (2, 5, 8, 9, 9a) of reduced thickness, or the step of connecting the cover layers (12, 13) in the mentioned places comprises the adhesive bonding of the two cover layers (12, 13) to each other through the locations (2, 5, 8, 9, 9a) of reduced thickness, or the step of connecting the cover layers (12, 13) in the mentioned places comprises the crimping of the two cover layers (12, 13) with each other through the locations (2, 5, 8, 9, 9a) of reduced thickness.

10. The method according to claim 9, wherein the intermediate layer (11) further has locations (2, 8, 9) of reduced thickness in places of the intermediate layer (11) that coincide with edges (3) of the banknotes (1) to be detached from the composite foil (10).

11. The method according to claim 9 or 10, wherein the intermediate layer (11) further has locations (5, 9a) of reduced thickness in places of the intermediate layer (11) that are disposed in central regions of the banknotes (1) to be detached from the composite foil (10).

12. The method according to any of the claims 9 to 11, **characterized by** the preceding step of producing the locations (8, 9, 9a) of reduced thickness during the manufacture of the intermediate layer (11) as watermarks by means of electrotypes.

13. The method according to any of the claims 9 to 12, **characterized by** the further step of embedding a windowed thread (6) in the intermediate layer (11) during the manufacture of the intermediate layer (11) and of connecting the windowed thread (6) with one of the cover layers (12, 13) by adhesive bonding or welding.

14. The method according to any of the claims 9 to 12, **characterized by** the step of embedding a pendulating thread (6) in the intermediate layer (11) during the manufacture of the intermediate layer (11) and of connecting the pendulating thread (6) with both cover layers (12, 13) by adhesive bonding or welding.

## Revendications

1. Billet de banque en film composite (1), comprenant deux couches de recouvrement polymères (12, 13) et au moins une couche intermédiaire (11) se trouvant entre les couches de recouvrement (12, 13), les couches de recouvrement (12, 13) définissant des coins (4) et bords (3) du billet de banque (1), la couche intermédiaire (11) s'étendant dans la zone des bords (3) au moins partiellement jusqu'aux bords (3), les couches de recouvrement (12, 13) étant jointes directement entre elles au moins aux coins (4), la couche intermédiaire (11) s'étendant jusqu'aux coins (4) et le cas échéant sur toute la longueur des bords (3) jusqu'aux bords (3) et la jonction des couches de recouvrement (12, 13) étant réalisée aux coins (4) et le cas échéant aux bords (3) par soudage des deux couches de recouvrement (12, 13) à travers la couche intermédiaire (11), par collage des deux couches de recouvrement (12, 13) au moyen d'une colle joignant les couches de recouvrement (12, 13) et pénétrant entièrement la couche intermédiaire (11) ou par sertissage, et l'épaisseur de la couche intermédiaire (11) étant réduite aux coins (4) et le cas échéant aux bords (3).

2. Billet de banque en film composite (1) selon la revendication 1, **caractérisé en ce que** la couche intermédiaire (11) consiste en du papier, notamment en du papier de sécurité.

3. Billet de banque en film composite (1) selon une des revendications 1 ou 2, **caractérisé en ce que** l'épaisseur de la couche intermédiaire (11) est en outre réduite à des endroits (5, 9, 9a) répartis sur la couche intermédiaire (11).

4. Billet de banque en film composite (1) selon la revendication 1 ou 3, **caractérisé en ce que** les coins (4) ou les endroits d'épaisseur réduite sont constitués par des filigranes plats.

5. Billet de banque en film composite (1) selon une des revendications de 1 à 4, **caractérisé par** au moins une caractéristique de sécurité ou élément design comprenant un trou dans la couche intermédiaire (11) pour la perception visuelle.

6. Billet de banque en film composite (1) selon une des revendications de 1 à 5, **caractérisé par** un fil de sécurité (6) encastré dans la couche intermédiaire (11), notamment un fil à fenêtre ou fil pendulaire

7. Billet de banque en film composite (1) selon une des revendications de 1 à 6, **caractérisé en ce que** la couche intermédiaire (11) comporte une zone à épaisseur réduite (7) qui s'étend sur toute la hauteur et/ou longueur du billet de banque (1).

8. Film composite (10), comprenant plusieurs billets de banque en film composite (1) agencés les uns à côté des autres selon une des revendications de 1 à 7, lesquels constituent une partie intégrante du film composite (10).

9. Procédé de fabrication d'un film composite (10) pour la fabrication subséquente de billets de banque en film composite (1), comprenant les étapes suivantes:
- mise à disposition d'une couche intermédiaire (11) de préférence en papier comportant des endroits (2, 5, 8, 9, 9a) d'épaisseur réduite dans la couche intermédiaire (11), au moins à des emplacements de la couche intermédiaire (11) qui coïncident avec des coins (4) de billets de banque (1) à détacher du film composite (10),
- agencement de la couche intermédiaire (11) entre deux couches de recouvrement polymères (12, 13), et
- jonction directe des couches de recouvrement (12, 13) l'une avec l'autre au moins aux emplacements cités, l'étape de la jonction des couches de recouvrement (12, 13) aux emplacements cités comprenant le soudage des deux couches de recouvrement (12, 13) l'une avec l'autre à travers les endroits (2, 5, 8, 9, 9a) d'épaisseur réduite ou l'étape de la jonction des couches de recouvrement (12, 13) aux emplacements cités comprenant le collage des deux couches de recouvrement (12, 13) l'une avec l'autre à travers les endroits (2, 5, 8, 9, 9a) d'épaisseur réduite ou l'étape de la jonction des couches de recouvrement (12, 13) aux emplacements cités comprenant le sertissage des deux couches de recouvrement (12, 13) l'une avec l'autre à travers les endroits (2, 5, 8, 9, 9a) d'épaisseur réduite.

10. Procédé selon la revendication 9, la couche intermédiaire (11) comportant en outre des endroits (2, 8, 9) d'épaisseur réduite à des emplacements de la couche intermédiaire (11) qui coïncident avec des bords (3) des billets de banque (1) à détacher du film composite (10).

11. Procédé selon la revendication 9 ou 10, la couche intermédiaire (11) comportant en outre des endroits (5, 9a) d'épaisseur réduite à des emplacements de la couche intermédiaire (11) qui se trouvent dans des zones centrales des billets de banque (1) à détacher du film composite (10).

12. Procédé selon une des revendications de 9 à 11, **caractérisé par** l'étape précédente de la génération des endroits (8, 9, 9a) d'épaisseur réduite pendant la fabrication de la couche intermédiaire (11) en tant que filigrane au moyen d'électrotypes.

13. Procédé selon une des revendications de 9 à 12, **caractérisé par** l'étape supplémentaire de l'encastrement d'un fil à fenêtre (6) dans la couche intermédiaire (11) pendant la fabrication de la couche intermédiaire (11) et de la jonction du fil à fenêtre (6) avec une des couches de recouvrement (12, 13) par collage ou soudage.

14. Procédé selon une des revendications de 9 à 12, **caractérisé par** l'étape de l'encastrement d'un fil pendulaire (6) dans la couche intermédiaire (11) pendant la fabrication de la couche intermédiaire (11) et de la jonction du fil pendulaire (6) avec les deux couches de recouvrement (12, 13) par collage ou soudage.
